(19) Europäisches Patentamt
European Patent Office
Office européen des brevets

(11) **EP 4 349 893 B1**

(12) **EUROPEAN PATENT SPECIFICATION**

(45) Date of publication and mention of the grant of the patent:
**08.07.2026 Bulletin 2026/28**

(21) Application number: **22816040.4**

(22) Date of filing: **30.05.2022**

(51) International Patent Classification (IPC):
***C08J 9/04** (2006.01)* ***C08J 9/00** (2006.01)*
***C08K 3/02** (2006.01)* ***C08K 3/38** (2006.01)*
***C08K 5/136** (2006.01)* ***C08K 5/1515** (2006.01)*
***C08K 5/21** (2006.01)* ***C08K 5/521** (2006.01)*

(52) Cooperative Patent Classification (CPC):
(C-Sets available)
**C08J 9/0023; C08J 9/0028; C08J 9/0066; C08K 3/02; C08K 3/38; C08K 5/136; C08K 5/1515; C08K 5/21; C08K 5/521;** C08J 9/0033; C08J 2201/026; C08J 2203/14; C08J 2203/142; C08J 2203/182; C08J 2361/10; (Cont.)

(86) International application number:
**PCT/JP2022/021907**

(87) International publication number:
**WO 2022/255292 (08.12.2022 Gazette 2022/49)**

(54) **RESIN COMPOSITION FOR PHENOL FOAM AND FOAM**

HARZZUSAMMENSETZUNG FÜR PHENOLSCHAUM UND SCHAUM

COMPOSITION DE RÉSINE POUR MOUSSE DE PHÉNOL ET MOUSSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 JP 2021091509**

(43) Date of publication of application:
**10.04.2024 Bulletin 2024/15**

(73) Proprietor: **Asahi Yukizai Corporation**
**Nobeoka-shi, Miyazaki 882-8688 (JP)**

(72) Inventor: **YAMADA, Shuji**
**Niwa-Gun, Aichi 4800105 (JP)**

(74) Representative: **TBK**
**Bavariaring 4-6**
**80336 München (DE)**

(56) References cited:
**WO-A1-2020/080148**
**WO-A1-2021/002097**
**JP-A- 2004 176 008**
**JP-A- 2005 120 337**
**JP-A- 2007 056 098**
**JP-A- 2012 012 446**
**JP-A- 2020 533 470**
**JP-A- 2022 018 806**
**JP-A- S59 124 940**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 349 893 B1

(52) Cooperative Patent Classification (CPC): (Cont.)
C08K 2003/026; C08K 2003/387

C-Sets
**C08K 3/02, C08L 61/06;**
**C08K 3/38, C08L 61/06;**
**C08K 5/136, C08L 61/06;**
**C08K 5/1515, C08L 61/06;**
**C08K 5/21, C08L 61/06;**
**C08K 5/521, C08L 61/06**

## Description

[FIELD OF THE INVENTION]

The present invention relates to a resin composition for phenolic foams leading to a phenolic resin foam which has closed cells, has a small difference between a closed cell ratio at the surface layer portion and a closed cell ratio at the inner portion deeper than the surface layer portion, is excellent in heat insulation, and hardly absorbs water when the foam is brought into contact with water.

[BACKGROUND ART]

Conventionally, a phenolic resin foam, also called a phenolic foam has been widely used for heat insulating materials and the like in a field of construction, for example, because the foam is excellent in heat resistance, flame retardancy, and the like. Such a phenolic resin foam is produced by subjecting a composition containing a phenolic resin, a blowing agent, a curing agent, and the like to foaming and curing. The obtained phenolic resin foam usually has closed cells, and the closed cells contain gas derived from the blowing agent.

The following techniques are known for phenolic resin foams and compositions used to form them.

Patent Document 1 discloses a phenolic resin foam characterized by subjected to mixing a resol-type phenolic resin with an acidic catalyst containing a resorcinol compound as a curing accelerator in the presence of a foaming agent and a foam stabilizer, and foaming.

Patent Document 2 discloses an expandable resol-type phenolic resin composition in which (A) a resol-type phenolic resin, (B) an acidic curing agent, (C) a foaming agent, (D) a foam stabilizer and (E) a modifier are contained, a mono- and/or poly-glycidyl ether compound having a weight average molecular weight of 200 to 3,000 and an epoxy equivalent of 150 to 2,500 as the component (E), is included in an amount of 0.2 to 20 parts by weight based on 100 parts by weight of the component (A); and a phenolic resin foam obtained by subjecting the composition to foaming and curing.

Further, Patent Document 3 discloses an expandable resol-type phenolic resin molding material characterized in that a liquid resol-type phenolic resin, a foaming agent, a foam stabilizer and an acid curing agent are contained, and an epoxy resin compound is further contained as an additive; and a phenolic resin foam obtained by subjecting the molding material to foaming and curing.

Patent Document 4 discloses a resin composition for phenolic foams comprising a resol-type phenolic resin, an acid curing agent, a blowing agent , and urea..

[PRIOR ART LITERATURE]

[PATENT LITERATURE]

Patent Literature 1: JP-A S59-124940
Patent Literature 2: JP-A 2004-176008
Patent Literature 3: JP-A 2011-16919
Patent Literature 4: WO 2021/002097 A1

[SUMMARY OF THE INVENTION]

[PROBLEMS THAT THE INVENTION IS TO SOLVE]

A conventionally known phenolic resin foam obtained using a composition containing a resol-type phenolic resin, an acid curing agent and a foaming agent has a large difference between a closed cell ratio at the surface layer portion of the foam and a closed cell ratio at the inner portion (center portion) deeper than the surface layer portion of the foam, and therefore the stable performance of the foam may not be obtained. In addition, some of the conventionally known phenolic resin foams tend to absorb water when the foam is brought in contact with water. When the phenolic resin foam is used in contact with a metal member in an environment that can be high-humid or in an environment exposed to rainwater in the field of construction, for example, the acid curing agent may be extracted with water, and the metal member may be corroded. Furthermore, when a flame retardant is added to the raw material composition in order to impart flame retardancy to the foam, the water absorption of the foam may be increased. In a case of producing a phenolic resin foam using a mold, the foam formed as curing progresses may become smaller than the size of the mold since the curing reaction of the phenolic resin is based on dehydration condensation.

An object of the present invention is to provide a phenolic resin foam which has closed cells, has a small difference between a closed cell ratio at the surface layer portion and a closed cell ratio at the inner portion deeper than the surface layer portion, is excellent in heat insulation because the initial thermal conductivity can be reduced, hardly absorbs water when the foam is brought into contact with water, and leads to a desired size while reducing the shrinkage rate during production.

The present invention is as follows.

[1] A resin composition for phenolic foams comprising (A) a resol-type phenolic resin, (B) an acid curing agent, (C) a blowing agent, (D) urea, and (E) an aliphatic epoxy compound.
[2] The resin composition for phenolic foams according to [1] above, wherein the aliphatic epoxy compound (E) has a glycidyl ether group at least one molecular terminal.
[3] The resin composition for phenolic foams according to [1] or [2] above, wherein the aliphatic epoxy compound (E) is an aliphatic polyol polyglycidyl ether compound.
[4] The resin composition for phenolic foams according to any one of [1] to [3] above, wherein an epoxy equivalent of the aliphatic epoxy compound (E) is in a range from 100 to 320 g/eq.
[5] The resin composition for phenolic foams according to any one of [1] to [4] above, wherein a viscosity of the aliphatic epoxy compound (E) is in a range from 5 to 250,000 mPa·s at a temperature of 25°C.
[6] The resin composition for phenolic foams according to any one of [1] to [5] above, further comprising a solid phosphorus-based flame retardant.
[7] The resin composition for phenolic foams according to [6] above, wherein the phosphorus-based flame retardant includes red phosphorus.
[8] The resin composition for phenolic foams according to any one of [1] to [7] above, further comprising a plasticizer.
[9] The resin composition for phenolic foams according to [8] above, wherein the plasticizer includes a polyester polyol.
[10] The resin composition for phenolic foams according to [8] above, wherein the plasticizer includes an organic phosphate.
[11] A foam obtained by subjecting the resin composition for phenolic foams according to any one of [1] to [10] above to foaming.
[12] The foam according to the above [11], wherein the average of a closed cell ratio at the surface layer portion and a closed cell ratio at the center portion in the foam is 80% or higher.

[EFFECT OF THE INVENTION]

When the resin composition for phenolic foams of the present invention is used, a phenolic resin foam can be efficiently obtained which has closed cells, has a small difference between a closed cell ratio at the surface layer portion and a closed cell ratio at the inner portion deeper than the surface layer portion, with a low shrinkage rate and a desired size. In addition, it is possible to produce a phenolic resin foam that has low thermal conductivity, excellent heat insulation, and hardly absorbs water when the foam is brought in contact with water.

In the case where the resin composition for phenolic foams of the present invention further includes a solid phosphorus-based flame retardant, a phenolic resin foam having flame retardancy while maintaining the property of being difficult to absorb water when the foam is brought in contact with water can be produced.

In the case where the resin composition for phenolic foams of the present invention further includes a plasticizer, a phenolic resin foam having uniform foam cells can be produced.

Since the phenolic resin foam of the present invention has closed cells, has a small difference between a closed cell ratio at the surface layer portion and a closed cell ratio at the inner portion deeper than the surface layer portion, and has low thermal conductivity, the foam is suitable as a heat insulating material. When the foam is used in an environment that can be high humid or in an environment exposed to rainwater, the acid curing agent is hardly extracted with water. It is therefore expected to have a corrosion inhibitory effect in the field, for example, of construction when the foam is placed in contact with a metal member.

[EMBODIMENT FOR CARRYING OUT THE INVENTION]

Hereinafter, the present invention will be described. The particulars described herein are given by way of example and for the purpose of illustrative discussion of the embodiments of the present invention, and are presented for the purpose of providing what is believed to be the description from which the principles and conceptual features of the present invention can be most effectively and readily understood. In this regard, it is not intended to show structural details of the present invention in more detail than is necessary for the fundamental understanding of the present invention, and the following description is taken making apparent to those skilled in the art how several forms of the present invention may

be embodied in practice.

1. Resin composition for phenolic foams

The resin composition for phenolic foams of the present invention (hereinafter, sometimes simply referred to as "the resin composition of the present invention") includes (A) a resol-type phenolic resin (hereinafter, also referred to as "component (A)"), (B) an acid curing agent (hereinafter, also referred to as "component (B)"), (C) a blowing agent (hereinafter, also referred to as "component (C)"), (D) urea (hereinafter, also referred to as "component (D)"), and (E) an aliphatic epoxy compound (hereinafter, also referred to as "component (E)").

The resin composition of the present invention may further include other components (described later) as necessary.

1-1. Component (A)

The component (A) is a resol-type phenolic resin obtained usually by reacting a phenol compound such as phenol, cresol, xylenol, paraalkylphenol, paraphenylphenol, and resorcinol, or their modified compounds, and an aldehyde such as formaldehyde, paraformaldehyde, furfural and acetaldehyde in the presence of an alkali catalyst such as sodium hydroxide, potassium hydroxide and calcium hydroxide. The ratio of the phenol compound and the aldehyde used is not particularly limited, but the molar ratio is usually about 1.0:1.5 to 1.0:3.0, and preferably 1.0:1. 8-1.0:2.5. The component (A) contained in the resin composition of the present invention may be of only one type, or may be of two or more types.

The viscosity and molecular weight of the component (A) are not particularly limited. The viscosity at a temperature of 25°C measured by a Brookfield viscometer (according to JIS K 7117-1) is preferably in a range from 2,000 to 100,000 mPa s, more preferably from 3,000 to 80,000 mPa s, and further preferably from 5,000 to 30,000 mPas. The weight average molecular weight Mw measured by gel permeation chromatography is preferably in a range from 400 to 3,000, and more preferably from 700 to 2,000. When the weight average molecular weight is 400 or more, it is easy to obtain a foam that further improves the compressive strength and reduces the thermal conductivity. When the weight-average molecular weight Mw is 3,000 or less, the resin composition of the present invention does not have high viscosity and has better handleability, making it easy to obtain a desired expansion ratio.

1-2. Component (B)

The component (B) as the acid curing agent is a component that accelerates the curing reaction of the component (A). Example thereof includes an inorganic acid such as phosphoric acid, phosphorous acid, hypophosphorous acid, pyrophosphoric acid, tripolyphosphoric acid, polyphosphoric acid, hydrochloric acid, sulfuric acid, and hydrofluoroboric acid; an organic acid such as an aromatic sulfonic acid such as benzene sulfonic acid, ethylbenzene sulfonic acid, toluene sulfonic acid, xylene sulfonic acid, phenol sulfonic acid, cresol sulfonic acid and naphthalene sulfonic acid, and an aliphatic sulfonic acid such as methane sulfonic acid and trifluoromethane sulfonic acid; and the like. The component (B) contained in the resin composition of the present invention may be of only one type, or may be of two or more types. The component (B) according to the present invention preferably includes an organic acid. Among these acid curing agents, phenol sulfonic acid, toluene sulfonic acid, xylene sulfonic acid, and naphthalene sulfonic acid are particularly preferably used since these compounds lead to an appropriate curing rate in the production of phenolic foam, the balance between curing of the resol-type phenolic resin and foaming by the foaming agent is further improved, thereby realizing a desired foam structure. In the present invention, the combined use of p-toluene sulfonic acid and xylene sulfonic acid is recommended. As for their usage ratio, the amount of p-toluene sulfonic acid is preferably larger than the amount of xylene sulfonic acid on a mass basis. Specifically, p-toluene sulfonic acid:xylene sulfonic acid in a mass ratio of 51:49 to 95:5 is advantageously employed.

The content of the component (B) in the resin composition of the present invention is preferably in a range from 1 to 50 parts by mass, more preferably from 5 to 30 parts by mass, and further preferably from 7 to 25 parts by mass, based on 100 parts by mass of the content of the component (A), from a viewpoint of curability of the composition in the foam production.

1-3. Component (C)

The component (C) as the foaming agent is a component that efficiently foams the component (A) while forming closed cells. Example thereof includes a hydrocarbon, a halogenated hydrocarbon, an ether compound, nitrogen, argon, carbon dioxide, water, air, and the like. The component (C) contained in the resin composition of the present invention may be of only one type, or may be of two or more types.

As the hydrocarbon, an aliphatic or alicyclic saturated hydrocarbons or an unsaturated hydrocarbon may be used. Of these, the aliphatic or alicyclic saturated hydrocarbons are preferred. The number of carbon atoms contained in the hydrocarbon is preferably in a range from 3 to 7. Example of the specific compounds includes propane, butane, pentane, isopentane, hexane, isohexane, neohexane, heptane, isoheptane, cyclopentane, and the like.

As the halogenated hydrocarbon, an aliphatic or alicyclic saturated hydrocarbons or an unsaturated hydrocarbon halide may be used. This compound may be a compound in which all hydrogen atoms constituting a hydrocarbon are substituted with halogen atoms, or a compound in which a part of hydrogen atoms in a hydrocarbon are substituted with halogen atoms while leaving some of the hydrogen atoms constituting the hydrocarbon. The halogen atom can be a fluorine atom, a chlorine atom, a bromine atom, or an iodine atom, preferably a fluorine atom and a chlorine atom, and particularly preferably a chlorine atom.

The halogenated hydrocarbon is preferably a halide of a saturated hydrocarbon, and more preferably a chloride of a saturated aliphatic hydrocarbon. Example thereof includes dichloroethane, propyl chloride, isopropyl chloride, butyl chloride, isobutyl chloride, pentyl chloride, isopentyl chloride and the like. Among these, propyl chloride and isopropyl chloride are preferable, and isopropyl chloride is particularly preferred.

The halide of an unsaturated hydrocarbon is preferably a compound obtained by replacing at least one hydrogen atom contained in an unsaturated hydrocarbon having 2 to 6 carbon atoms with a fluorine atom and/or a chlorine atom. Specific compounds include tetrafluoropropene, fluorochloropropene, trifluoromonochloropropene, pentafluoropropene, fluorochlorobutene, hexafluorobutene, and the like.

Specifically, examples of the hydrofluoroolefm (HFO), which is one of the halides of such unsaturated hydrocarbons, include, a pentafluoropropene such as 1,2,3,3,3-pentafluoropropene (HFO1225ye); a tetrafluoropropene such as 1,3,3,3-tetrafluoropropene (HFO1234ze), 2,3,3,3-tetrafluoropropene (HFO1234yf), and 1,2,3,3-tetrafluoropropene (HFO1234ye); a trifluoropropene such as 3,3,3-trifluoropropene (HFO1243zf); a tetrafluorobutene isomer (HFO1354); a pentafluorobutene isomer (HFO1345); a hexafluorobutene isomer (HFO1336) such as 1,1,1,4,4 ,4-hexafluoro-2-butene (HFO1336mzz); a heptafluorobutene isomer (HFO1327); a heptafluoropentene isomer (HFO1447); an octafluoropentene isomer (HFO1438); a nonafluoropentene isomer (HFO1429); and the like. Further, examples of the hydrochlorofluoroolefm (HCFO) include 1-chloro-3,3,3-trifluoropropene (HCFO-1233zd), 2-chloro-3,3,3-trifluoropropene (HCFO-1233xt), dichlorotrifluoropropene (HCFO1223), 1-chloro-2,3,3-trifluoropropene (HCFO-1233yd), 1-chloro-1,3,3-trifluoropropene (HCFO-1233zb), 2-chloro- 1,3,3-trifluoropropene (HCFO-1233xe), 2-chloro-2,2,3-trifluoropropene (HCFO-1233xc), 3-chloro-1,2,3-trifluoropropene (HCFO- 1233ye), 3-chloro-1,1,2-trifluoropropene (HCFO-1233yc); and the like.

In the present invention, the component (C) preferably consists of a plurality of components, and as a specific combination example includes a combination of an aliphatic or alicyclic saturated hydrocarbon and a halide of the saturated hydrocarbon. Particularly preferred is a combination of a saturated aliphatic hydrocarbon and a compound which is a chloride of saturated hydrocarbon and has at least one hydrogen atom. A combination of isopentane and isopropyl chloride is recommended as such a combination of two types of foaming agents, whereby the object of the present invention can be achieved more advantageously. In this case, the mass ratio is not particularly limited, but is usually 5 to 25% by mass and 75 to 95% by mass, respectively, based on 100% by mass of a total of both.

The content of the component (C) in the resin composition of the present invention is preferably in a range from 1 to 30 parts by mass, more preferably from 3 to 28 parts by mass, and further preferably from 5 to 25 parts by mass, based on 100 parts by mass of the content of the component (A), from viewpoints of foamability and curability of the component (A) in the foam production.

1-4. Component (D)

The component (D) as urea is a component which is effectively capable of lowering the initial thermal conductivity of the resulting foam, reducing the odor of the foam, and further minimalizing the difference between a closed cell ratio at the surface layer portion of the foam and a closed cell ratio at the inner portion deeper than the surface layer portion by utilizing with the component (E), thereby reducing water absorption.

The content of the component (D) in the resin composition of the present invention is preferably in a range from 0.5 to 20 parts by mass, more preferably from 1 to 15 parts by mass, and further preferably from 2 to 10 parts by mass, based on 100 parts by mass of the content of the component (A).

1-5. Component (E)

The component (E) as the aliphatic epoxy compound is a compound which has a linear and/or branched carbon chain and an epoxy group, leads to formation of a foam having a small shrinkage rate and a desired size, and reduces the water absorption of the foam. The component (E) contained in the resin composition of the present invention may be of only one type, or may be of two or more types.

The carbon chain constituting the component (E) usually forms a hydrocarbon group or a substituted hydrocarbon group in which a hydrogen atom contained in the hydrocarbon group is substituted with at least one atom selected from oxygen atom, nitrogen atom, sulfur atom and a halogen atom, or a functional group including at least one atom selected from oxygen atom, nitrogen atom, sulfur atom and a halogen atom, such as hydroxy group. The number of epoxy groups contained in the component (E) is not particularly limited. It is preferably 1 or more, more preferably 2 or more, and further preferably 2 to 6.

In the present invention, the component (E) is preferably a compound having a glycidyl ether group represented by the following formula (1) wherein the epoxy group constitutes the glycidyl ether group, since the effect of reducing the water absorption of the foam is sufficiently obtained.

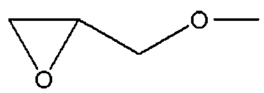

(1)

The number of glycidyl ether groups contained in the component (E) is not particularly limited. It is preferably 1 or more, more preferably 2 or more, and further preferably 2 to 6.

A compound having a glycidyl ether group represented by the above formula (1) is not particularly limited, but is preferably an aliphatic polyol polyglycidyl ether compound. This aliphatic polyol polyglycidyl ether compound may have a hydroxy group. Moreover, the aliphatic polyol polyglycidyl ether compound is preferably an aliphatic polyhydric alcohol polyglycidyl ether.

Examples of the aliphatic polyol polyglycidyl ether compound include ethylene glycol diglycidyl ether, diethylene glycol diglycidyl ether, polyethylene glycol diglycidyl ether, propylene glycol diglycidyl ether, polypropylene glycol diglycidyl ether, glycerin polyglycidyl ether, diglycerol polyglycidyl ether, glycerol polyglycidyl ether, polyglycerol polyglycidyl ether, trimethylolethane polyglycidyl ether, trimethylolpropane polyglycidyl ether, ditrimethylolpropane polyglycidyl ether, sorbitol polyglycidyl ether, pentaerythritol polyglycidyl ether, resorcinol diglycidyl ether, neopentyl glycol diglycidyl ether, hydrogenated bisphenol A type diglycidyl ether, neopentyl glycol diglycidyl ether, hexanediol diglycidyl ether, hydroquinone diglycidyl ether, 2,6-hexanetriol polyglycidyl ether, 1,4-butanediol diglycidyl ether, 1,6-hexanediol diglycidyl ether, and the like. In addition, the aliphatic polyol polyglycidyl ether compound may be either a monomer or a polymer. When a monomer is used, a well-balanced foam can be obtained in which the water absorption is low when the foam is brought in contact with water, and the difference between a closed cell ratio at the surface layer portion and a closed cell ratio at the inner portion deeper than the surface layer portion is small.

In the present invention, the epoxy equivalent of the component (E) is preferably in a range from 100 to 320 g/eq, more preferably from 100 to 300 g/eq, and further preferably from 100 to 280 g/eq, from viewpoints of favorable foam productivity and water absorption reduction effect of the resulting foam. The epoxy equivalent is a value measured according to JIS K 7236:2009.

In the present invention, the viscosity of the component (E) is not particularly limited. The viscosity at a temperature of 25°C measured using Brookfield viscometer is preferably in a range from 5 to 25,000 mPa·s, more preferably from 10 to 22,000 mPa·s, further preferably from 10 to 6,000 mPa·s, and particularly from 10 to 900 mPa·s, from viewpoints of handleability of the resin composition and water absorption reduction effect of the resulting foam.

As described above, the preferred upper limit of the viscosity of the component (A) is 100,000 mPa·s, and the preferred upper limit of the viscosity of the component (E) is 25,000 mPa·s. Therefore, the component (E) will be a viscosity reducing agent. In this respect, the fluidity of the resin composition of the present invention is improved, and the moldability of the foam is improved.

The content of the component (E) in the resin composition of the present invention is preferably in a range from 1 to 20 parts by mass, more preferably from 2 to 18 parts by mass, and further preferably from 3 to 15 parts by mass, based on 100 parts by mass of the content of the component (A), from a viewpoint of water absorption reduction effect of the resulting foam.

Since the resin composition of the present invention essentially includes the above components (A), (B), (C), (D) and (E), a phenolic resin foam can be efficiently obtained which has a small difference between a closed cell ratio at the surface layer portion and a closed cell ratio at the inner portion deeper than the surface layer portion, with a low shrinkage rate and a desired size. In addition, it is possible to produce a phenolic resin foam that has low thermal conductivity, excellent heat insulation, and hardly absorbs water when the foam is brought in contact with water. Furthermore, in a preferred embodiment, a foam having a dimensional change rate by the method described in [Examples] below of preferably 2.5% or less, and more preferably 2.4% or less can be produced.

1-6. Other Components

The resin composition of the present invention may further include other components in addition to the above

essential components (A), (B), (C), (D) and (E). Examples of the other components include a flame retardant, a plasticizer, a foam stabilizer, a corrosion inhibitor, inorganic fillers, and the like.

The flame retardant may be either solid or liquid. Example thereof includes a phosphorus-containing compound, a triazole compound, a triazine compound, a cyclic monoureide, a cyclic diureide, an amidine compound, a tetrazole compound, a borate, a stannate, a molybdate, a tungstic acid salts, a metal oxide (antimony oxide, etc.), a metal hydroxide, a metal sulfide, a polyphenylene sulfide-based resin, a polyphenylene oxide-based resin, a polycarbonate-based resin, a polyarylate-based resin, an aromatic amide resin, an aralkyl resin, an aromatic vinyl resin, and the like. When the resin composition of the present invention includes a flame retardant, the flame retardant may be of only one type, or may be of two or more types.

The flame retardant is preferably a solid phosphorus-containing compound (hereinafter, also referred to as "component (F)"). This component (F) may be either an inorganic material (hereinafter, referred to as "inorganic phosphorus-based flame retardant") or an organic material (hereinafter, referred to as "organic phosphorus-based flame retardant"). In general, when a foam is produced using a resin composition containing a flame retardant, although the desired flame retardancy is obtained, the water absorption of the foam may be increased and the dimensional change rate may be increased. However, when the component (F) is included as a flame retardant, a flame retardant phenolic resin foam in which the dimensional change rate is low while maintaining the property of being difficult to absorb water can be produced since the resin composition of the present invention includes the components (D) and (E).

Examples of the inorganic phosphorus flame retardant include red phosphorus, a (poly)phosphoric acid salt, a phosphazene, and the like. It is noted the "(poly)phosphoric acid salt" means a monophosphoric acid salt and a polyphosphoric acid salt.

Examples of the (poly)phosphoric acid salt include a salt of a non-condensed or condensed phosphoric acid (or phosphorous acid) and at least one selected from a metal, ammonia, an aliphatic amine and an aromatic amine. The non-condensed or condensed phosphoric acid (or phosphorous acid) is orthophosphoric acid, phosphorous acid, hypophosphorous acid, a polyphosphoric acid such as metaphosphoric acid, pyrophosphoric acid, triphosphoric acid and tetraphosphoric acid, or a polyphosphorous acid such as metaphosphorous acid and pyrophosphorous acid. The metal is one of from IA to IVB group elements in periodic table. Examples of the metals of IA to IVB group include lithium, sodium, calcium, barium, iron (II), iron (III), aluminum, and the like. Examples of the aliphatic amine include methylamine, ethylamine, diethylamine, triethylamine, ethylenediamine, piperazine, and the like. Examples of the aromatic amine include pyridine, triazine, melamine, ammonium, and the like.

Specific example of the monophosphoric acid salt includes an ammonium salt such as ammonium phosphate, ammonium dihydrogen phosphate, and diammonium hydrogen phosphate; a sodium salt such as monosodium phosphate, disodium phosphate, trisodium phosphate, monosodium phosphite, disodium phosphite, and sodium hypophosphite; a potassium salt such as monopotassium phosphate, dipotassium phosphate, tripotassium phosphate, monopotassium phosphite, dipotassium phosphite, and potassium hypophosphite; a lithium salt such as monolithium phosphate, dilithium phosphate, trilithium phosphate, monolithium phosphite, dilithium phosphite, and lithium hypophosphite; a barium salt such as barium dihydrogen phosphate, barium hydrogen phosphate , tribarium phosphate, and barium hypophosphite; a magnesium salt such as magnesium monohydrogen phosphate, magnesium hydrogen phosphate, trimagnesium phosphate, and magnesium hypophosphite; a calcium salt such as calcium dihydrogen phosphate, calcium hydrogen phosphate, tricalcium phosphate, and calcium hypophosphite; and the like. Examples of the polyphosphoric acid salt include ammonium polyphosphate, piperazine polyphosphate, melamine polyphosphate, ammonium amide polyphosphate, aluminum polyphosphate, and the like.

Examples of the organic phosphorus flame retardant include a phosphoric acid ester, a phosphoric acid ester amide, a phosphonitrile compound, an organic phosphonic acid compound such as a phosphonic acid ester, and a phosphonic acid metal salt), an organic phosphinic acid compound such as phosphinic acid metal salt, a phosphine oxide, a resorcinol phosphate, a hydroquinone phosphate, a biphenol phosphate, a bisphenol phosphate, and the like.

In the present invention, the component (F) preferably includes an inorganic phosphorus-based flame retardant, more preferably includes red phosphorus or a (poly)phosphoric acid salt, and particularly preferably includes red phosphorus since high flame retardancy is obtained.

In the case of producing a resin composition containing red phosphorus, a red phosphorus having a coating layer on the surface is preferably used since a resin composition containing the red phosphorus leads to excellent handleability, and good dispersibility of the red phosphorus. The constituent material of the coating layer may be either an inorganic compound or an organic compound. Examples of the inorganic compound include a metal oxide or metal hydroxide such as aluminum hydroxide, magnesium hydroxide, zinc hydroxide, titanium hydroxide, aluminum oxide, magnesium oxide, zinc oxide and titanium oxide. Examples of the organic compound include a thermosetting resin such as a phenolic resin, a furan resin, and a xylene-formaldehyde resin.

The average particle size of the component (F) measured by a laser diffraction/scattering method is preferably in a range from about 1 to 100 $\mu$m, and more preferably from about 5 to 50 $\mu$m. If the particle size of the component (F) is too small, uniform dispersing of the flame retardant in the resin composition may be difficult. On the other hand, if the particle

size of the component (F) is too large, uniform dispersing effect in the resin composition may not be obtained.

In the case where the resin composition of the present invention includes a flame retardant, the content of the flame retardant is preferably in a range from 0.3 to 30 parts by mass, more preferably from 1 to 25 parts by mass, and further preferably from 2 to 20 parts by mass based on 100 parts by mass of the content of the component (A).

In the case where the resin composition of the present invention includes red phosphorus as a flame retardant, the resin composition may include a flame retardant other than red phosphorus. For example, another solid phosphorus-based flame retardant, a liquid phosphorus-based flame retardant, a flame retardant containing no elemental phosphorus, and the like can be used. In this case, the content of the other flame retardant is preferably in a range from 0.5 to 1,000 parts by mass, more preferably from 1 to 300 parts by mass, and further preferably from 3 to 100 parts by mass based on 100 parts by mass of the content of red phosphorus.

Examples of the plasticizer include a polyester polyol, a polyethylene glycol, an aromatic carboxylic acid ester, an organic phosphoric acid ester, and the like. When the resin composition of the present invention includes a plasticizer, the plasticizer may be of only one type, or may be of two or more types. In a resin composition containing a plasticizer, the plasticizer permeates into the molecules of the component (A) to weaken the intermolecular force of the component (A) and facilitate the movement of each molecular chain. In addition, the plasticizer leads to flexibility of the cured resin of the component (A), and a synergistic effect can further reduce the water absorption of the foam.

A polyester polyol and an organic phosphoric acid ester are preferable as the plasticizer, and particularly preferred is a polyester polyol.

Since the polyester polyol has a structure having an ester bond and a hydroxyl group that are excellent in hydrophilicity and surface activity, the polyester polyol has good compatibility with the hydrophilic component (A), and a uniform resin composition can be obtained. Moreover, when a resin composition containing a polyester polyol is used, a foam having uniform cells can be obtained without causing uneven distribution of cells.

The plasticizer such as a polyester polyol and an organic phosphate ester may be used singly, however, in the case where these are used in combination, it is possible to produce a phenolic resin foam that is even less water-absorbent when the foam is brought in contact with water.

The polyester polyol is a compound having a plurality of hydroxy groups obtained by an esterification reaction between a polyol and a polycarboxylic acid. The polyol and polycarboxylic acid as raw materials may be any of an aliphatic compound, an alicyclic compound and an aromatic compound. The aromatic compound is more preferable.

In the present invention, the polyester polyol is preferably a polyester polyol obtained by an esterification reaction of a polyol having 2 to 5 hydroxy groups and a polycarboxylic acid having 2 to 4 carboxy groups, and particularly preferably a polyester polyol represented by the following general formula (2) obtained by an esterification of a polyol having two hydroxy groups (hereinafter, referred to as "diol") and a polycarboxylic acid having two carboxy groups (hereinafter, referred to as "dicarboxylic acid").

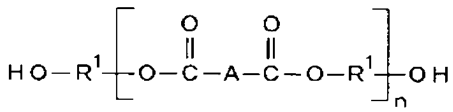

(2)

(In the formula, A is a residue obtained by removing a carboxyl group from the dicarboxylic acid, $R^1$ is a residue obtained by removing a hydroxy group from the diol, and n is an integer of 1 or more.)

The diol may be an aliphatic diol, an alicyclic diol, or an aromatic diol. The diol may have other functional groups, an ether bond or an ester bond in the molecule.

Examples of the aliphatic diol include an alkane diol such as ethylene glycol, propylene glycol, 1,3-propanediol, 1,2-butanediol, 1,4-butanediol, 1,5-pentanediol, 1,6-hexanediol, 1,8-octanediol, 1,9-nonanediol, 2,2-dimethyl-1,3-propanediol (neopentyl glycol), 2,2-diethyl-1,3-propanediol, 2,2-dipropyl-1,3-propanediol, 2,2-diisopropyl-1,3-propanediol, 2,2-dibutyl-1,3-propanediol, 2,2-diisobutyl-1,3-propanediol, 2-methyl-2-dodecyl-1,3-propanediol, 2-butyl-2-ethyl-1,3-propanediol, and 2-propyl-2-pentyl-1,3-propanediol; an oxyalkylene glycol such as diethylene glycol, triethylene glycol, polyethylene glycol, dipropylene glycol, tripropylene glycol, and polypropylene glycol; a polyester diol that is a reaction product (ring-opened compound) between a lactone such as β-butyrolactone, γ-butyrolactone and δ-valerolactone and an oxyalkylene glycol such as ethylene glycol, diethylene glycol and triethylene glycol; and the like.

Examples of the cycloaliphatic diol include cyclopentane-1,2-diol, cyclopentane-1,2-dimethanol, cyclohexane-1,2-diol, cyclohexane-1,2-dimethanol, cyclohexane-1,3-diol, cyclohexane-1,3-dimethanol, cyclohexane-1,4-diol, cyclohexane-1,4-dimethanol, 2,5-norbomanediol, and the like.

Examples of the aromatic diol include benzene-1,2-dimethanol, benzene-1,3-dimethanol, benzene-1,4-dimethanol, catechol, resorcinol, hydroquinone, 2,2-bis(4-hydroxyphenyl) Propane (bisphenol A), and the like.

In the present invention, an aliphatic diol and an alicyclic diol are preferable as the diol, and ethylene glycol, diethylene glycol, propylene glycol, dipropylene glycol, 1,4-butanediol, 1,6-hexanediol, neopentyl glycol, cyclohexane-1,2-dimethanol, cyclohexane-1,3-dimethanol, and cyclohexanedimethanol are particularly preferred.

The dicarboxylic acid may be an aliphatic dicarboxylic acid, an alicyclic dicarboxylic acid, or an aromatic dicarboxylic acid. The dicarboxylic acid may have other functional groups in the molecule.

Examples of the aliphatic dicarboxylic acid include adipic acid, pimelic acid, suberic acid, azelaic acid, sebacic acid, and the like.

Examples of the alicyclic dicarboxylic acid include cyclohexane-1,2-dicarboxylic acid, cyclohexane-1,3-dicarboxylic acid, cyclohexane-1,4-dicarboxylic acid, and the like.

Examples of the aromatic dicarboxylic acid include phthalic acid, isophthalic acid, terephthalic acid, naphthalene-2,3-dicarboxylic acid, naphthalene-1,4-dicarboxylic acid, naphthalene-2,6-dicarboxylic acid, and the like.

In the present invention, an aromatic dicarboxylic acid is preferable as the dicarboxylic acid, and phthalic acid, isophthalic acid and terephthalic acid are particularly preferred.

The weight-average molecular weight of the polyester polyol is preferably in a range from 200 to 10,000, and more preferably from 200 to 5,000, since the resulting foam can be obtained in which flexibility is given to the cell walls and deterioration over time is suppressed.

The hydroxyl value of the polyester polyol is not particularly limited, but is usually in a range from 10 to 500 mgKOH/g.

In the case where the resin composition of the present invention includes a polyester polyol, the content thereof is preferably in a range from 1 to 20 parts by mass, more preferably from 2 to 15 parts by mass, and further preferably from 3 to 10 parts by mass based on 100 parts by mass of the content of the component (A) since a foam can be obtained in which in which flexibility is given to the cell walls and cells are homogeneous.

The organic phosphate ester is preferably a compound that is liquid at normal temperature, and is, for example, a compound represented by the following general formula (3).

$$O{=}P\text{-}(OR^2)_3 \qquad (3)$$

(In the formula, each $R^2$ may be the same or different and is a hydrocarbon group or a halogenated hydrocarbon group.)

Examples of the organic phosphate represented by the general formula (3) include trimethyl phosphate, triethyl phosphate, tripropyl phosphate, tributyl phosphate, tripentyl phosphate, trihexyl phosphate, triheptyl phosphate, trioctyl phosphate, tri-2-ethylhexyl phosphate, tricresyl phosphate, trixylenyl phosphate, cresyl diphenyl phosphate, tris(2-chloroethyl) phosphate, tris(chloropropyl) phosphate, tris(dichloropropyl) phosphate, and the like.

In the case where the resin composition of the present invention includes an organic phosphate ester, the content thereof is preferably in a range from 0.1 to 15 parts by mass, more preferably from 0.5 to 10 parts by mass, and further preferably from 1 to 8 parts by mass based on 100 parts by mass of the content of the component (A) since the resulting foam is imparted with low water absorbency.

There are some compounds that are conventionally known as a flame retardant among the preferable organic phosphate esters, therefore a foam having flame retardancy can be obtained when a resin composition containing such an organic phosphate ester is used. In addition, when an organic phosphoric acid ester having a viscosity of 100 mPa·s or less at a temperature of 25°C is used, the viscosity of the resin composition can be reduced to improve the fluidity.

Examples of the foam stabilizer include castor oil or its alkylene oxide adduct, an alkylphenol ethylene oxide adduct, a polyoxyethylene alkyl ether, a polyoxyethylene polyoxypropylene glycol, a dimethylpolysiloxane-polyoxyalkylene copolymer, a dimethylpolysiloxane-polyoxyethylene-polyoxypropylene copolymer, a polyoxyethylene sorbitan fatty acid ester, and the like.

Examples of the corrosion inhibitor include a nitrogen-containing bridged cyclic compound such as quinuclidine and hexamethylenetetramine (hexamine).

Examples of the inorganic filler include microparticles made of calcium carbonate, magnesium carbonate, calcium sulfate, barium sulfate, calcium silicate, magnesium hydroxide, aluminum hydroxide, mica, talc, bentonite, zeolite, silica gel, aluminum oxide, titanium oxide, antimony oxide, or the like.

1-7. Production method of resin composition for phenolic foams

The resin composition of the present invention can be produced by mixing the above components (A), (B), (C), (D) and (E) with other components used in combination as necessary.

2. Foam

The foam of the present invention is obtained by subjecting the above resin composition of the present invention to foaming. The foam of the present invention is one that has generally closed cells with a density ranging from 10 to150 kg/$m^3$. If the density thereof is low, the foam becomes light reducing materials to improve handleability, but the mechanical

strength is reduced. Therefore, the density is preferably in a range from 20 to 80 kg/$m^3$, more preferably from 27 to 70 kg/$m^3$, further preferably from 29 to 60 kg/$m^3$, and particularly preferably from 30 to 50 kg/$m^3$.

In the foam of the present invention, the closed cell ratio (according to ASTM D 2856) at the center of the foam is preferably 85% or higher, and more preferably 86% or higher. In addition, the average of a closed cell ratio at the surface layer portion of the foam and a closed cell ratio at the inner portion (center portion) deeper than the surface layer portion of the foam is 80% or higher, and preferably 85% or higher. Since the foam of the present invention is formed using a resin composition containing specific components, the difference between a closed cell ratio at the surface layer portion of the foam and a closed cell ratio at the inner portion (center portion) deeper than the surface layer portion of the foam is small. For example, when the foam is subjected to cutting to prepare a bulky foam with a thickness of 50 mm or more and then measuring the closed cell ratio at the surface layer from the surface to a depth of 7 mm and the closed cell ratio at the inner portion (center portion) deeper than the surface layer, the difference is preferably 15% or less, and more preferably 12% or less.

The thermal conductivity of the foam of the present invention (according to ISO 11561 Annex B, measurement temperature: 20°C) is preferably 0.0200 W/(m·K) or lower, and more preferably 0.0197 W/(m·K) or lower. A foam having such a low thermal conductivity is suitable for heat insulating materials, packaging materials, and the like.

The water absorption of the foam of the present invention when the foam is brought in contact with water, as measured by a method according to JIS K 9511, is preferably 5.0 g/100 $cm^2$ or less, and more preferably 4.5 g/100 $cm^2$ or less. When a foam with such properties is used in an environment that can be high humid or in an environment exposed to rainwater, the acid curing agent is hardly extracted with water. Corrosion of a metal member is therefore suppressed in the field, for example, of construction when the foam is placed in contact with the metal member.

A foam produced using a resin composition containing a flame retardant has excellent flame retardancy. The oxygen index measured by a method according to JIS K 7201-2 is preferably 28 or higher, and more preferably 30 or higher. The "oxygen index" means the minimum oxygen concentration (% by volume) required for the material to sustain combustion.

The method for producing the foam of the present invention is not particularly limited while selecting the method appropriately depending on the application and the like. For example, conventionally known methods such as those described below are applied. Further, cutting or the like can be, if necessary, conducted as appropriate to form a foam member having a desired shape and size.

(1) A molding method in which the resin composition is flowed onto an endless conveyor belt and then subjected to foaming and curing.
(2) A method in which the resin composition is spot-filled and then subjected to partially foaming and curing.
(3) A method in which the resin composition is filled in a mold and then subjected to foaming and curing under a pressurized condition.
(4) A method in which the resin composition is filled in a predetermined large space and then subjected to foaming and curing to form a foam block.
(5) A method in which the resin composition is subjected to press-fitting into a cavity and then, foaming and curing.

Regarding conditions for producing the foam, the temperature is preferably in a range from 40°C to 90°C, and more preferably from 50°C to 80°C. The heating time is appropriately selected depending on the foam size, but is usually in a range from 5 to 30 minutes.

When the above resin composition of the present invention is subjected to foaming and curing at a position in contact with or near other member using the method for producing the foam of the present invention, a composite can be obtained in which the foam and the other member are in a bonded state. As other members, articles such as sheet-shaped, plate-shaped, rod-shaped, fiber-shaped, and modified ones thereof, which are made of an inorganic material, an organic material, or a composite material containing these may be used.

[EXAMPLES]

Hereinafter, the present invention will be specifically described with reference to Examples, but the present invention is not limited to these Examples.

1. Raw materials for production of composition

The raw materials for phenolic foam resin compositions used in Examples and Comparative Examples are shown below.

1-1. Resol-type phenolic resin

Phenolic resins A-1 and A-2 obtained by the following method were used.

(Synthesis method of phenolic resin A-1)

1,600 parts by mass of phenol, 2,282 parts by mass of formalin (47% by mass), and 41.6 parts by mass of an aqueous sodium hydroxide solution (50% by mass) were charged to a three-necked reaction flask equipped with a reflux device, a thermometer, and a stirrer, and then reaction was conducted at a temperature of 80°C for 70 minutes. Subsequently, the reaction solution was set to a temperature of 40°C, neutralized by adding an aqueous solution of p-toluenesulfonic acid (50% by mass). After that, dehydration and concentration were conducted under reduced pressure and heating conditions until the moisture content reaches 9% by mass to obtain a resol-type phenolic resin in a liquid state. The viscosity of the obtained phenolic resin A-1 was measured at a temperature of 25°C using a Brookfield viscometer in accordance with JIS K 7117-1 and found to be 9,000 mPa·s.

(Synthesis method of phenolic resin A-2)

1,600 parts by mass of phenol, 2,282 parts by mass of formalin (47% by mass), and 41.6 parts by mass of an aqueous sodium hydroxide solution (50% by mass) were charged to a three-necked reaction flask equipped with a reflux device, a thermometer, and a stirrer, and then reaction was conducted at a temperature of 80°C for 90 minutes. Subsequently, the reaction solution was set to a temperature of 40°C, neutralized by adding an aqueous solution of p-toluenesulfonic acid (50% by mass). After that, dehydration and concentration were conducted under reduced pressure and heating conditions until the moisture content reaches 12% by mass to obtain a resol-type phenolic resin in a liquid state. When the viscosity of the obtained phenolic resin A-2 was measured under the same conditions as above, it was 10,000 mPa·s.

1-2. Curing agent

Para-toluenesulfonic acid and xylenesulfonic acid were mixed at a mass ratio of 2:1, and the mixture was used as a curing agent.

1-3. Foaming agent

Isopropyl chloride and isopentane were mixed at a mass ratio of 85:15, and the mixture was used as a foaming agent.

1-4. Urea

1-5. Epoxy compound

The following commercially available products (aliphatic epoxy compounds or aromatic epoxy resins) were used.

E-1: trimethylolpropane triglycidyl ether "ADEKA GLYCIROL ED-505" (trade name) manufactured by ADEKA CORPORATION
Number of functional groups: 3, epoxy equivalent: 150 g/eq, viscosity: 150 mPa s (25°C)
E-2: neopentyl glycol diglycidyl ether "ADEKA GLYCIROL ED-523T" (trade name) manufactured by ADEKA CORPORATION
Number of functional groups: 2, epoxy equivalent: 140 g/eq, viscosity: 15 mPa·s (25°C)
E-3: polypropylene glycol diglycidyl ether "ADEKA GLYCIROL ED-506" (trade name) manufactured by ADEKA CORPORATION
Number of functional groups: 2, epoxy equivalent: 300 g/eq, viscosity: 60 mPa·s (25°C)
E-4: sorbitol polyglycidyl ether "Denacol EX-614B" (trade name) manufactured by Nagase ChemteX Corporation
Number of functional groups: 4, epoxy equivalent: 173 g/eq, viscosity: 5,000 mPa·s (25°C)
E-5: sorbitol polyglycidyl ether "Denacol EX-614" (trade name) manufactured by Nagase ChemteX Corporation
Epoxy equivalent: 167 g/eq, viscosity: 21,200 mPa·s (25°C)
E-6: bisphenol A type epoxy resin "jER825" (trade name) manufactured by Mitsubishi Chemical Corporation
Number of functional groups: 2, Epoxy equivalent: 175 g/ eq, viscosity: 5,500 mPa·s (25°C)
E-7: bisphenol F type epoxy resin "ADEKA RESIN EP4901" (trade name) manufactured by ADEKA CORPORATION

Functional group number: 2, epoxy equivalent: 170 g/eq, viscosity: 3,500 mPa·s (25°C)

1-6. Solid flame retardant

F-1: red phosphorus "NOVAEXCEL 140" (trade name) manufactured by Rin Kagaku Kogyo Co., Ltd. Average particle size: 25 to 35 μm, surface coated
F-2: zinc borate
F-3: tetrabromo bisphenol A

1-7. Plasticizer

G-1: polyester polyol obtained by reacting phthalic acid and diethylene glycol at a molar ratio of 1:2
G-2: tris (chloropropyl) phosphate "TMCPP" (trade name) manufactured by DAIHACHI CHEMICAL INDUSTRY CO., LTD.
Viscosity: 60 mPa s (25°C)
G-3: triethyl phosphate "TEP" (trade name) manufactured by DAIHACHI CHEMICAL INDUSTRY CO., LTD.
Viscosity: 1.6 mPa s (25°C)

2. Production and evaluation of resin compositions for phenolic foams

A resin composition for phenolic foams was produced using the above raw materials. The resin composition was then heated to prepare a phenolic resin foam, and the following various evaluations were performed.

(1) Water absorption property
"Water absorption" was measured according to JIS K 9511. The unit is g/100cm$^2$.
(2) Closed cell ratio
Test piece T1 (size: 7 mm × 25 mm × 25 mm) which is a surface layer portion obtained by cutting a foam from the surface to a depth of 7 mm, and test piece T2 (size: 25 mm × 25 mm × 25 mm, height direction cut out 12.5 mm vertically from the center line of the foam) which was cut from the inside deeper than that were subjected to closed cell ratio measurement according to ASTM D 2856. The unit is %.
(3) Dimensional change rate
In order to evaluate the dimensional change during molding of the phenolic resin foam, the dimensions of the resulting foam were measured according to JIS A 9511, and the following formula was used to calculate a ratio of the contracted length to the mold dimensions (300 mm × 300 mm × 50 mm) as a percentage. In the width direction of the foam, the length of the line connecting the centers of the two opposing sides was measured at two points. In the thickness direction, the thickness of each center of the four sides of the foam was measured. The dimensional change rate for each of them was calculated, and the average value of the calculated dimensional change rates of the measured width and thickness was taken as the dimensional change rate. The unit is %.

$$\text{Dimensional change rate} = [(\text{mold dimensions}) - (\text{foam dimensions})] \div (\text{mold dimensions}) \times 100$$

(4) Initial thermal conductivity
Thermal conductivity of a measurement sample that is a phenolic resin foam sample (200 mm × 200 mm × 50 mm) after being left at a temperature of 70°C for 4 days was measured using a thermal conductivity measuring device "HC-074 304" manufactured by EKO INSTRUMENTS CO., LTD., according to JIS A 1412-2 (1999) stipulated "heat flow meter method", and the measured value was taken as the "initial conductivity". The setting temperature of a low temperature plate was 10°C, and the setting temperature of a high temperature plate was 30°C.
(5) Oxygen index
In order to evaluate flame retardancy, the oxygen index was measured according to JIS K 7201-2 "Plastics - Test method for flammability by oxygen index - Part 2: Test at room temperature".
(6) Uniformity of cells in the foam
The foam was cut in parallel to the thickness direction, and then 10 panelists visually observed the internal cross section in an atmosphere of 23°C. Uniformity of the cells was evaluated according to the following criteria and

superiority or inferiority based on these average levels was judged. It is noted that when this level is low as 1, the uniformity of the cells is better.

1: Uniform cells with no uneven portions were observed.
2: Slightly uneven cells were observed, but there is no practical problem.
3: Uneven cells were clearly observed.
4: Large number of uneven cells was clearly observed.

Example 1

100 parts by mass of phenolic resin A-1, 3 parts by mass of foam stabilizer (castor oil ethylene oxide adduct (number of moles added: 22)), 16 parts by mass of curing agent, 8 parts by mass of foaming agent, 5 parts by mass of urea and 3 parts by mass of epoxy compound E-1 were mixed to produce a liquid resin composition for phenolic foams (hereinafter, referred to as "resin composition S-1") (see Table 1).

Subsequently, the obtained resin composition S-1 was placed in a mold (300 mm × 300 mm × 50 mm) preheated to a temperature between 70°C and 75°C, and the mold with the composition was placed in a heating furnace. Then, foaming and hardening were conducted at a temperature of 70°C for 10 minutes, and demolded. Heating was further conducted at 70°C for 12 hours to harden, and a phenolic resin foam having closed cells and a density of 33 to 35 $kg/m^3$ (hereinafter, referred to as "foam H-1") was obtained. Various evaluations were performed on the obtained foam H-1 (see Table 1).

Examples 2 to 20

The same procedures as in Example 1 were conducted except that types and amounts of raw materials used were as shown in Tables 1 and 2 to produce liquid resin compositions for phenolic foams (hereinafter, referred to as "resin composition S-2 to S-20"). After that, phenolic resin foams (hereinafter, referred to as "foams H-2 to H-20") were produced in the same manner as in Example 1, and various evaluations were performed (see Tables 1 and 2).

Comparative Examples 1 to 10

The same procedures as in Example 1 were conducted except that types and amounts of raw materials used were as shown in Table 3 to produce liquid resin compositions for phenolic foams (hereinafter, referred to as "resin composition SS-1 to SS-10"). After that, phenolic resin foams (hereinafter, referred to as "foams HH-1 to HH-10") were produced in the same manner as in Example 1, and various evaluations were performed (see Table 3).

Table 1

| | | | | | Example | | | | | | | | | |
|---|---|---|---|---|---|---|---|---|---|---|---|---|---|---|
| | | | | | 1 | 2 | 3 | 4 | 5 | 6 | 7 | 8 | 9 | 10 |
| Resin composition | Type | | | | S-1 | S-2 | S-3 | S-4 | S-5 | S-6 | S-7 | S-8 | S-9 | S-10 |
| | Raw material | Resin | A-1 | parts by mass | 100 | 100 | 100 | 100 | 100 | 100 | | 100 | 100 | 100 |
| | | | A-2 | parts by mass | | | | | | | 100 | | | |
| | | Curing agent | | parts by mass | 16 | 16 | 16 | 16 | 16 | 16 | 18 | 16 | 16 | 16 |
| | | Blowing agent | | parts by mass | 8 | 8 | 8 | 8 | 8 | 8 | 9.5 | 8 | 8 | 8 |
| | | Urea | | parts by mass | 5 | 5 | 5 | 5 | 5 | 5 | 5 | 5 | 5 | 5 |
| | | Epoxy compound | E-1 | parts by mass | 3 | 10 | 15 | | | | | | | |
| | | | E-2 | parts by mass | | | | 3 | 10 | 15 | 10 | | | |
| | | | E-3 | parts by mass | | | | | | | | 10 | | |
| | | | E-4 | parts by mass | | | | | | | | | 10 | |
| | | | E-5 | parts by mass | | | | | | | | | | 10 |
| Foam | Type | | | | H-1 | H-2 | H-3 | H-4 | H-5 | H-6 | H-7 | H-8 | H-9 | H-10 |
| | Evaluation | Water absorption | | $g/100cm^2$ | 4.2 | 2.7 | 2.6 | 4.1 | 2.3 | 2.2 | 4.1 | 2.9 | 3.1 | 2.9 |
| | | Closed cell ratio | At center | % | 91.0 | 89.6 | 90.2 | 91.1 | 88.3 | 89.1 | 90.7 | 86.6 | 90.7 | 91.1 |
| | | | At outer layer | % | 86.0 | 91.3 | 84.0 | 80.1 | 90.0 | 87.3 | 84.9 | 89.9 | 88.0 | 87.2 |
| | | Dimensional change rate | Width direction | %/Mold dimension | -2.3 | -2.4 | -1.9 | -2.4 | -2.0 | -2.0 | -2.0 | -2.2 | -1.6 | -1.7 |
| | | | Thickness direction | %/Mold dimension | -1.8 | -1.9 | -1.1 | -2.3 | -1.2 | -0.8 | -2.3 | -2.4 | -1.3 | -1.6 |
| | | Initial thermal conductivity | | W/mK | 0.0192 | 0.0192 | 0.0192 | 0.0193 | 0.0192 | 0.0195 | 0.0193 | 0.0194 | 0.0193 | 0.0193 |
| | | Oxygen index | | % | N/A | 29.4 | N/A | N/A | 29.2 | N/A | N/A | N/A | N/A | N/A |
| | | Cell uniformity | | | N/A | 2 | N/A | N/A | 2 | N/A | N/A | N/A | N/A | N/A |

Table 2

| | | | | | Example | | | | | | | | | |
|---|---|---|---|---|---|---|---|---|---|---|---|---|---|---|
| | | | | | 11 | 12 | 13 | 14 | 15 | 16 | 17 | 18 | 19 | 20 |
| Resin composition | Type | | | | S-11 | S-12 | S-13 | S-14 | S-15 | S-16 | S-17 | S-18 | S-19 | S-20 |
| | Raw material | Resin | A-1 | parts by mass | 100 | 100 | 100 | 100 | 100 | 100 | 100 | 100 | 100 | 100 |
| | | Curing agent | | parts by mass | 16 | 16 | 16 | 16 | 16 | 16 | 16 | 16 | 16 | 16 |
| | | Blowing agent | | parts by mass | 8 | 8 | 8 | 8 | 8 | 8 | 8 | 8 | 8 | 8 |
| | | Urea | | parts by mass | 5 | 5 | 5 | 5 | 5 | 5 | 5 | 5 | 5 | 5 |
| | | Epoxy compound | E-1 | parts by mass | 10 | | 10 | 10 | 10 | | 10 | 10 | | 10 |
| | | | E-2 | parts by mass | | 10 | | | | 10 | | | 10 | |
| | | Flame retardant | F-1 | parts by mass | 10 | 10 | 10 | 10 | | | | | | |
| | | Plasticizer | G-1 | parts by mass | | | 5 | 5 | 5 | 5 | 5 | 5 | 5 | |
| | | | G-2 | parts by mass | | | | | | | 5 | | | |
| | | | G-3 | parts by mass | | | | 5 | | | | 5 | 5 | 5 |
| Foam | Type | | | | H-11 | H-12 | H-13 | H-14 | H-15 | H-16 | H-17 | H-18 | H-19 | H-20 |
| | Evaluation | Water absorption | | $g/100cm^2$ | 2.9 | 2.7 | 2.7 | 2.2 | 2.4 | 2.1 | 2.3 | 2.1 | 2.2 | 2.5 |
| | | Closed cell ratio | At center | % | 91.1 | 90.2 | 91.6 | 91.1 | 90.5 | 90.0 | 91.3 | 91.3 | 91.4 | 91.3 |
| | | | At outer layer | % | 89.3 | 88.1 | 89.5 | 90.0 | 91.4 | 90.2 | 89.8 | 90.0 | 89.9 | 89.8 |
| | | Dimensional change rate | Width direction | %/Mold dimension | -2.4 | -2.1 | -2.4 | -2.2 | -2.3 | -1.8 | -2.3 | -2.2 | -2.2 | -2.3 |
| | | | Thickness direction | %/Mold dimension | -1.9 | -1.1 | -1.9 | -1.8 | -1.9 | -1.2 | -1.9 | -1.8 | -1.9 | -1.9 |
| | | Initial thermal conductivity | | W/mK | 0.0192 | 0.0192 | 0.0193 | 0.0193 | 0.0191 | 0.0191 | 0.0191 | 0.0191 | 0.0191 | 0.0191 |
| | | Oxygen index | | % | 35.6 | 35.5 | 35.3 | N/A | 29.1 | N/A | N/A | N/A | N/A | N/A |
| | | Cell uniformity | | | N/A | N/A | N/A | N/A | 1 | 1 | 1 | 1 | 1 | 1 |

Table 3

| | | | | | Comparative Example | | | | | | | | | |
|---|---|---|---|---|---|---|---|---|---|---|---|---|---|---|
| | | | | | 1 | 2 | 3 | 4 | 5 | 6 | 7 | 8 | 9 | 10 |
| Resin composition | Type | | | | SS-1 | SS-2 | SS-3 | SS-4 | SS-5 | SS-6 | SS-7 | SS-8 | SS-9 | SS-10 |
| | Raw material | Resin | A-1 | parts by mass | 100 | 100 | 100 | 100 | | 100 | 100 | 100 | 100 | 100 |
| | | | A-2 | parts by mass | | | | | 100 | | | | | |
| | | Curing agent | | parts by mass | 16 | 16 | 16 | 16 | 18 | 16 | 16 | 16 | 16 | 16 |
| | | Blowing agent | | parts by mass | 8 | 8 | 8 | 8 | 9.5 | 8 | 8 | 8 | 8 | 8 |
| | | Urea | | parts by mass | 5 | 5 | 5 | | | | 5 | | 5 | 5 |
| | | Epoxy compound | E-1 | parts by mass | | | | | | 10 | | 10 | | |
| | | | E-6 | parts by mass | 10 | | | | | | | | | |
| | | | E-7 | parts by mass | | 10 | | | | | | | | |
| | | Flame retardant | F-1 | parts by mass | | | | | | | 10 | 10 | | |
| | | | F-2 | parts by mass | | | | | | | | | 5 | |
| | | | F-3 | parts by mass | | | | | | | | | | 10 |
| Foam | Type | | | | HH-1 | HH-2 | HH-3 | HH-4 | HH-5 | HH-6 | HH-7 | HH-8 | HH-9 | HH-10 |
| | Evaluation | Water absorption | | $g/100cm^2$ | 4.3 | 3.5 | 5.3 | 6.6 | 8.6 | 6.3 | 6.7 | 7.5 | 11.2 | 7.3 |
| | | Closed cell ratio | At center | % | 80.7 | 72.3 | 90.4 | 93.7 | 93.3 | 55.2 | 89.8 | 54.3 | 90.1 | 89.6 |
| | | | At outer layer | % | 62.4 | 63.4 | 81.6 | 94.3 | 91.9 | 77.0 | 81.2 | 76.7 | 81.2 | 80.8 |
| | | Dimensional change rate | Width direction | %/Mold dimension | -2.0 | -2.6 | -2.6 | -2.8 | -2.7 | -2.2 | -2.9 | -2.6 | -2.9 | -2.9 |
| | | | Thickness direction | %/Mold dimension | -2.3 | -2.0 | -2.3 | -4.5 | -2.8 | -3.4 | -2.6 | -3.7 | -2.6 | -2.7 |
| | | Initial thermal conductivity | | W/mK | 0.0200 | 0.0203 | 0.0191 | 0.0190 | 0.0197 | 0.0194 | 0.0191 | 0.0194 | 0.0198 | 0.0199 |
| | | Cell uniformity | | | N/A | N/A | N/A | 4 | N/A | 4 | N/A | N/A | N/A | N/A |

From the results indicated in Tables 1 to 3, the following matter is clarified.

Comparative Examples 1 and 2 are examples of compositions including aromatic epoxy resins instead of aliphatic epoxy compounds. In Comparative Example 1, the obtained foam HH-1 had a large difference of 15% or more between a closed cell ratio at the surface layer portion and a closed cell ratio at the inner portion deeper than the surface layer portion. In Comparative Example 2, the obtained foam HH-2 had a low closed cell ratio at the center portion of less than 75%. Comparative Examples 3 to 5, 7, 9 and 10 are examples of compositions including no epoxy compounds. Obtained foams had high water absorptions of over 5.0 g/100 $cm^2$. Comparative Examples 6 and 8 are examples of compositions not containing urea. Obtained foams had low closed cell ratios at the surface layer portion and the inner portion deeper than the surface layer portion of less than 80%, and had high water absorptions of over 5.0 g/100 $cm^2$.

On the other hand, Examples 1 to 20 are examples of the composition of the present invention. Both closed cell ratios at the surface layer portion and the inner portion deeper than the surface layer portion were 80% or more, and the difference between the two closed cell ratios was as small as less than 12%. Examples 11 and 12 are examples using a resin composition obtained by adding 10 parts by mass of red phosphorus to each resin composition of Examples 2 and 5. The water absorptions of obtained foam H-11 and H-12 were slightly larger than those of foams H-2 and H-5, but were less than 3.0 g/100 $cm^2$. Solid flame retardants did not lead to increase water absorption. Examples 15, 17, 18 and 20 are examples using a resin composition obtained by adding a plasticizer to the resin composition of Example 2. The water absorption of the obtained foam was less than that of the foam H-2. In addition, Examples 16 and 19 are examples using a resin composition obtained by adding a plasticizer to the resin composition of Example 5. Water absorptions of obtained foams were less than that of the foam H-5.

[INDUSTRIAL APPLICABILITY]

The resin composition for phenolic foams of the present invention is suitable for forming a phenolic resin foam having a low water absorption and a high closed cell ratio. The obtained phenolic resin foam can be suitably used, for example, in the field of construction when it is placed in contact with a metal member in an environment that can be humid or exposed to rainwater.

## Claims

1. A resin composition for phenolic foams comprising (A) a resol-type phenolic resin, (B) an acid curing agent, (C) a blowing agent, (D) urea, and (E) an aliphatic epoxy compound.

2. The resin composition for phenolic foams according to claim 1, wherein the aliphatic epoxy compound (E) has a glycidyl ether group at least one molecular terminal.

3. The resin composition for phenolic foams according to claim 1 or 2, wherein the aliphatic epoxy compound (E) is an aliphatic polyol polyglycidyl ether compound.

4. The resin composition for phenolic foams according to any one of claims 1 to 3, wherein an epoxy equivalent of the aliphatic epoxy compound (E) is in a range from 100 to 320 g/eq.

5. The resin composition for phenolic foams according to any one of claims 1 to 4, wherein a viscosity of the aliphatic epoxy compound (E) measured using a Brookfield viscometer is in a range from 5 to 250,000 mPa·s at a temperature of 25°C.

6. The resin composition for phenolic foams according to any one of claims 1 to 5, further comprising a solid phosphorus-based flame retardant.

7. The resin composition for phenolic foams according to claim 6, wherein the phosphorus flame retardant comprises red phosphorus.

8. The resin composition for phenolic foams according to any one of claims 1 to 7, further comprising a plasticizer.

9. The resin composition for phenolic foams according to claim 8, wherein the plasticizer comprises a polyester polyol.

10. The resin composition for phenolic foams according to claim 8, wherein the plasticizer comprises an organic phosphate.

11. A foam obtained by subjecting the resin composition for phenolic foams according to any one of claims 1 to 10 to foaming.

12. The foam according to claim 11, wherein the average of a closed cell ratio at the surface layer portion and a closed cell ratio at the center portion in the foam is 80% or higher, whereby the closed cell ratio is determined in accordance with the method indicated in the specification.

## Patentansprüche

1. Harzzusammensetzung für Phenolschäume, umfassend (A) ein Phenolharz vom Resol-Typ, (B) ein saures Härtungsmittel, (C) ein Treibmittel, (D) Harnstoff und (E) eine aliphatische Epoxidverbindung.

2. Harzzusammensetzung für Phenolschäume gemäß Anspruch 1, wobei die aliphatische Epoxidverbindung (E) an mindestens einem Molekülende eine Glycidylethergruppe aufweist.

3. Harzzusammensetzung für Phenolschäume gemäß Anspruch 1 oder 2, wobei die aliphatische Epoxidverbindung (E) eine aliphatische Polyol-Polyglycidyletherverbindung ist.

4. Harzzusammensetzung für Phenolschäume gemäß einem der Ansprüche 1 bis 3, wobei ein Epoxidäquivalent der aliphatischen Epoxidverbindung (E) in einem Bereich von 100 bis 320 g/Äq ist.

5. Harzzusammensetzung für Phenolschäume gemäß einem der Ansprüche 1 bis 4, wobei eine mit einem Brookfield-Viskosimeter gemessene Viskosität der aliphatischen Epoxidverbindung (E) bei einer Temperatur von 25 °C im Bereich von 5 bis 250.000 mPa·s ist.

6. Harzzusammensetzung für Phenolschäume gemäß einem der Ansprüche 1 bis 5, die ferner ein festes Flammschutzmittel auf Phosphorbasis umfasst.

7. Harzzusammensetzung für Phenolschäume gemäß Anspruch 6, wobei das Phosphor-Flammschutzmittel roten Phosphor umfasst.

8. Harzzusammensetzung für Phenolschäume gemäß einem der Ansprüche 1 bis 7, die ferner einen Weichmacher umfasst.

9. Harzzusammensetzung für Phenolschäume gemäß Anspruch 8, wobei der Weichmacher ein Polyesterpolyol umfasst.

10. Harzzusammensetzung für Phenolschäume gemäß Anspruch 8, wobei der Weichmacher ein organisches Phosphat umfasst.

11. Schaum, der durch Schäumen der Harzzusammensetzung für Phenolschäume gemäß einem der Ansprüche 1 bis 10 erhalten wird.

12. Schaum gemäß Anspruch 11, wobei der Mittelwert aus einem Anteil geschlossener Zellen im Oberflächenschichtbereich und einem Anteil geschlossener Zellen im Kernbereich des Schaums 80 % oder mehr beträgt, wobei der Anteil geschlossener Zellen gemäß dem in der Beschreibung angegebenen Verfahren bestimmt wird.

## Revendications

1. Composition de résine pour mousses phénoliques comprenant (A) une résine phénolique de type résol, (B) un agent de durcissement acide, (C) un agent gonflant, (D) de l'urée, et (E) un composé époxy aliphatique.

2. Composition de résine pour mousses phénoliques selon la revendication 1, dans laquelle le composé époxy aliphatique (E) comporte un groupe éther glycidylique à au moins une extrémité moléculaire.

3. Composition de résine pour mousses phénoliques selon la revendication 1 ou 2, dans laquelle le composé époxy

aliphatique (E) est un composé éther polyglycidylique de polyol aliphatique.

4. Composition de résine pour mousses phénoliques selon l'une quelconque des revendications 1 à 3, dans laquelle un équivalent époxy du composé époxy aliphatique (E) est compris dans une plage de 100 à 320 g/eq.

5. Composition de résine pour mousses phénoliques selon l'une quelconque des revendications 1 à 4, dans laquelle une viscosité du composé époxy aliphatique (E), mesurée à l'aide d'un viscosimètre Brookfield, est comprise dans une plage de 5 à 250 000 mPa·s à une température de 25 °C.

6. Composition de résine pour mousses phénoliques selon l'une quelconque des revendications 1 à 5, comprenant en outre un retardateur de flamme solide à base de phosphore.

7. Composition de résine pour mousses phénoliques selon la revendication 6, dans laquelle le retardateur de flamme à base de phosphore comprend du phosphore rouge.

8. Composition de résine pour mousses phénoliques selon l'une quelconque des revendications 1 à 7, comprenant en outre un plastifiant.

9. Composition de résine pour mousses phénoliques selon la revendication 8, dans laquelle le plastifiant comprend un polyester polyol.

10. Composition de résine pour mousses phénoliques selon la revendication 8, dans laquelle le plastifiant comprend un phosphate organique.

11. Mousse obtenue en soumettant la composition de résine pour mousses phénoliques selon l'une quelconque des revendications 1 à 10 à un processus de moussage.

12. Mousse selon la revendication 11, dans laquelle la moyenne d'un taux de cellules fermées à la partie de la couche superficielle et d'un taux de cellules fermées à la partie centrale de la mousse est de 80 % ou plus, le taux de cellules fermées étant déterminé conformément à la méthode indiquée dans le descriptif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S59124940 A
- JP 2004176008 A
- JP 2011016919 A
- WO 2021002097 A1